Europäisches Patentamt

European Patent Office

Office européen des brevets

(11) Veröffentlichungsnummer: **0 491 690 B1**

(12) **EUROPÄISCHE PATENTSCHRIFT**

(45) Veröffentlichungstag der Patentschrift: **08.06.94**

(51) Int. Cl.5: **H02M 7/5395**, H02M 7/5387

(21) Anmeldenummer: **90900855.9**

(22) Anmeldetag: **12.12.89**

(86) Internationale Anmeldenummer:
**PCT/EP89/01520**

(87) Internationale Veröffentlichungsnummer:
**WO 91/03865 (21.03.91 91/07)**

(54) **PULSSTEUERVERFAHREN FÜR EINEN MEHRSTUFIGEN WECHSELRICHTER.**

(30) Priorität: **11.09.89 DE 3930294**
**11.09.89 DE 3930295**
**11.09.89 DE 8911681 U**
**11.09.89 DE 8911680 U**

(43) Veröffentlichungstag der Anmeldung:
**01.07.92 Patentblatt 92/27**

(45) Bekanntmachung des Hinweises auf die
Patenterteilung:
**08.06.94 Patentblatt 94/23**

(84) Benannte Vertragsstaaten:
**CH DE LI**

(56) Entgegenhaltungen:
**US-A- 3 581 212**

**IEEE TRANSACTIONS ON INDUSTRY APPLI-
CATIONS. vol. IA-20, no. 4, Juli 1984, NEW
YORK US Seiten 769 - 775;Kawamura & Hoft:
" Instantaneous Feedback Controlled PWM
Inverter with Adaptive Hysteresis" siehe Seite 769, rechte Spalte, Zeile 17 - Seite 770,
rechte Spalte, letzter Absatz; Figuren 1, 2**

**Intern. Conf. on Ind. Electronics, Control and
Instrumentation IECON '87. November 1987,
Cambridge, Massachusetts, USA.Pages 375 -
382; Kobayashi & Yasuda: "A Self-Oscillating
Inverter system with Optimal PWM Pattern"
see the whole document**

(73) Patentinhaber: **SIEMENS AKTIENGESELL-
SCHAFT
Wittelsbacherplatz 2
D-80333 München(DE)**

(72) Erfinder: **HOLTZ, Joachim
Am Forsthof 16
D-5600 Wuppertal(DE)**

EP 0 491 690 B1

## Beschreibung

Die Erfindung betrifft ein Verfahren zur Steuerung eines Pulswechselrichters mit Schalteinrichtungen, die auf die Wechselspannungsanschlüsse des Pulswechselrichters jeweils eine von mehreren Gleichspannungsstufen durchschalten.

Zwischenkreisumrichter mit eingeprägter Gleichspannung im Zwischenkreis enthalten häufig einen Wechselrichter mit Umschaltern, die die Gleichspannung jeweils mit alternierendem Vorzeichen auf einen Wechselspannungsanschluß des Wechselrichters durchschalten. Soll unabhängig von der Polarität zwischen dem Anschluß und der Gleichspannungsquelle ein Stromfluß in beiden Richtungen möglich sein, so kann dies dadurch erreicht werden, daß jeder Anschluß über einen eigenen Umschalter zwischen den beiden Polen der Gleichspannungsquelle umschaltbar ist. Das Potential an einem Anschluß kann daher nur das Potential des positiven oder negativen Gleichspannungsanschlusses annehmen ("Zweipunkt-Wechselrichter").

Bei einem einphasigen Pulswechselrichter ist folglich als Anschlußspannung nur der Wert Null, (nämlich wenn beide Ausgänge über ihre jeweiligen Umschalter mit dem gleichen Pol der Gleichspannung verbunden sind) oder (nach Betätigung der Umschalter) der positive oder negative Wert der Eingangsgleichspannung möglich. Die gewünschte Wechselspannung kann also nur durch Umschalten zwischen diesen drei vorgegebenen Spannungsstufen erreicht werden.

Ein Verfahren gemäß dem Oberbegriff des Anspruchs 1 ist durch die US-A-3 581 212 bekannt. Bei diesem Verfahren wird ein mehrstufiger Pulswechselrichter über einen nicht-linearen Regelkreis so gesteuert, daß eine zurückgeführte Ausgangsspannung (Feedback) gemessen und in einem Summationsglied mit einem Sollwert verglichen wird. Die aus diesem Vergleich ermittelte Differenz ist die Fehlersignalspannung, die mittels einer Verstärkerschaltung (P-Glied) proportional verstärkt und einem Komparator zugeführt wird. Im Komparator wird die verstärkte Fehlersignalspannung mit einem oberen und einem unteren Grenzwert verglichen. Beide Grenzwerte sind fest vorgegeben und betragsmäßig gleich groß; sie definieren die Bandbreite, innerhalb derer die Fehlersignalspannung liegen darf.

Ferner ist durch den Aufsatz von Kawamura und Hoft (IEEE Transactions on Industry Applications, Vol. IA-20, No. 4, Juli 1984, New York, Seiten 769-775) ein Verfahren bekannt, bei dem wiederum eine Ausgangsspannung mit einem Sollwert verglichen, also eine Differenz gebildet wird. Dieser Differenzwert wird über ein PD-Glied Geleitet und einer Hystereseschaltung zugeführt. Da die Differenzwerte einer Hystereseschaltung zugeführt werden, kann dieses Verfahren nur bei Zweipunktwechselrichtern angewandt werden. Die Hystereseschaltung dient ausschließlich dazu, die Schaltfrequenz zu begrenzen bzw. bei adaptiver Hysterese die Schaltfrequenz zu beeinflussen, und damit eindeutige Ansteuersignale (konstante Schaltfrequenz) für die Schalter zu erhalten. Auch dieses Verfahren ist auf ein Feedback der Ausgangsspannung (Meßwert-Rückkopplung) angewiesen.

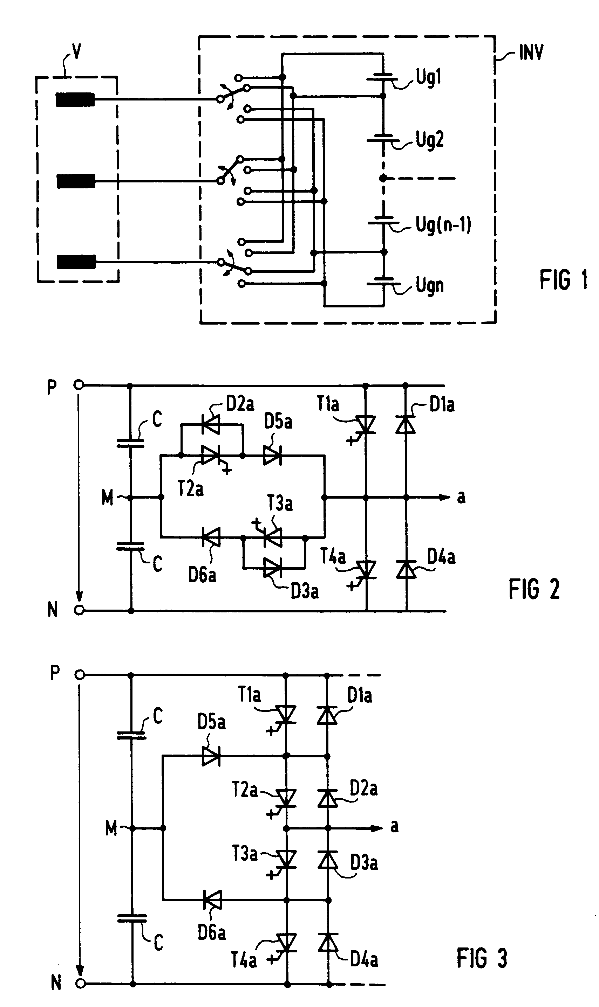

FIG 1 zeigt eine allgemeine Darstellung eines mehrstufigen Wechselrichters nach dem Stand der Technik. Insgesamt können $2n + 1$ Spannungszustände an jeden der drei Wechselrichteranschlüsse eines dreiphasigen Verbrauchers V dadurch erzeugt werden, daß von n Gleichspannungsquellen Ug1...Ugn eine gewünschte Anzahl mit einer vorgegebenen Polarität in Reihe geschaltet und über einen entsprechenden n-fachen Umschalter jeweils mit einem der drei Ausgänge des Wechselrichters INV verbunden werden.

Die Figuren 2 und 3 zeigen jeweils schaltungstechnische Ausführungen der Schalteinrichtungen, die im Falle bekannter "Dreipunkt-Wechselrichter" einen Anschluß a mit einem der drei Anschlüsse einer zweistufigen Gleichspannungsquelle verbinden. Die Gleichspannungsquelle besteht in diesem Fall aus zwei in Reihe liegenden Kondensatoren C mit dem Mittelabgriff M, die an ihren Enden P und N zum Beispiel von einer ungesteuerten Gleichrichterbrücke gespeist sein können. Um an den Ausgang a das Potential P bzw. N anzulegen, wird das Ventil T1a bzw. T4a gezündet, zu denen die Dioden D1a und D4a antiparallel geschaltet sind, um auch eine Umkehrung der Stromführungsrichtung zu ermöglichen. Die mit Dioden beschalteten Transistoren T2a und T3a dienen dazu, den Anschluß a bei beiden Stromführungsrichtungen an den Mittelabgriff M der reihengeschalteten Spannungsquellen anzuschließen. Im Fall der FIG 3 ist es erforderlich, auch für den Zustand P bzw. N die Schalter T2a und T3a zu betätigen ("etz-Archiv", Bd.10 (1988), S.215-220).

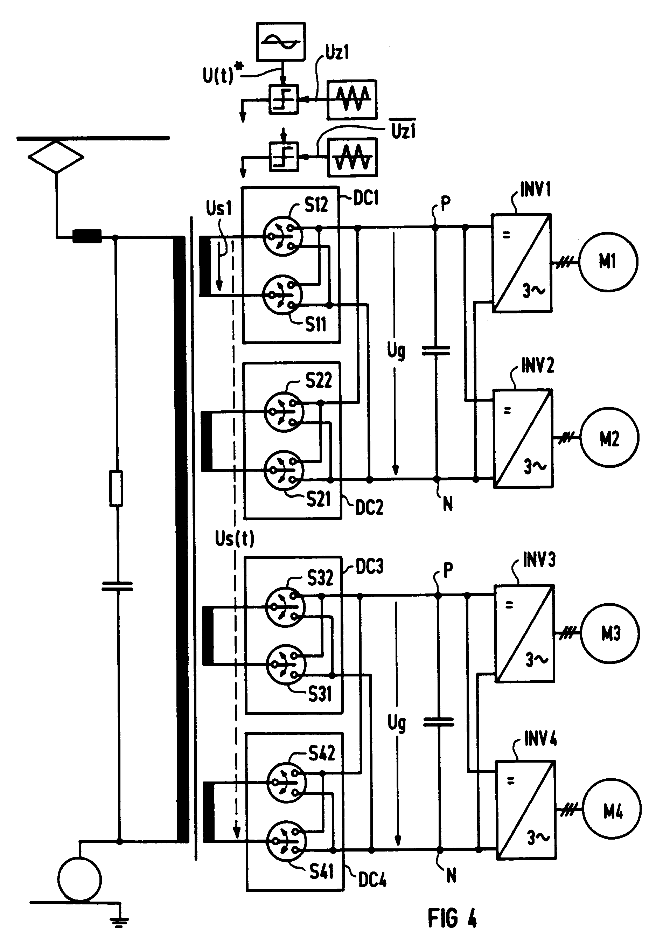

FIG 4 zeigt am Beispiel einer einphasigen Wechselspannung eine andere Variante eines mehrstufigen Wechselrichters, die z.B. in einem Umrichter zur Speisung der Fahrmotoren M1, M2, M3, M4 für eine Lokomotive der Deutschen Bundesbahn dient. Der gesamte Wechselrichter besteht aus vier einphasigen Pulswechselrichtern DC1, DC2, DC3, DC4, die über Gleichstromzwischenkreise an entsprechende Einzel-Wechselrichtern INV1...INV4 angeschlossen sind. Der aus den Einzel-Wechselrichtern DC1,...DC4 aufgebaute Wechselrichter wird als Gleichrichter betrieben und ist über ein Oberschwingungs-Filter und den Stromabnehmer bzw. die Räder der Lokomotive an die zwischen dem Fahrdraht und der Schiene liegende Spannung angeschlossen.

Der einphasige Pulswechselrichter DC1 ist unter der Bezeichnung "4-Quadranten-Steller" bereits bekannt und wird von einer Gleichspannungsquelle mit einer praktisch konstanten Gleichspannung Ug vorgegebener Polarität gespeist. Sind seine beiden Umschalter S11 und S12 gemeinsam auf den Gleichspannungspol P oder gemeinsam auf den Gleichspannungspol N geschaltet, so nimmt seine an den Wechselspannungsausgängen auftretende Spannung U1 den Wert U1 = 0 an. Dieser "ausgeschaltete" Zustand des Einzelwechselrichters und seiner Spannungsquelle entspricht bei Pulswechselrichtern, die mit einer praktisch konstanten Gleichstromquelle gespeist werden, einem Zustand, bei dem z.B. der Gleichstrom der Stromquelle über einen Bypass geführt und der Strompfad zwischen der Gleichstromquelle und den wechselspannungsseitigen Anschlüssen des Wechselrichters unterbrochen ist.

Die Gleichspannungsquelle des Pulswechselrichters DC1 wird durch Umlegen der Umschalteinrichtungen mit einer vorgegebenen Polarität "eingeschaltet". So wird durch Umlegen von S11 auf N und von S12 auf P die Gleichspannungsquelle +Ug mit ihrer positiven Polarität auf die Wechselspannungsanschlüsse "durchgeschaltet" bzw. durch Umlegen von S11 auf P und von S12 auf N wird der durchgeschalteten Gleichspannung eine entgegengesetzte Polarität an den Anschlüssen vorgegeben.

Der Einzelsteller DC1 mit seiner positiven Einzel-Gleichspannung Ug und seinen Umschalteinrichtungen S11 und S12 ist daher bereits in der Lage, eine der drei Gleichspannungsstufen +Ug, 0,-Ug durchzuschalten.

Darüber hinaus betrifft aber die Erfindung insbesondere Pulswechselrichter, deren jeweils durchgeschaltete Gleichspannungsstufen durch Addition mehrerer einzelner Gleichspannungen unter Berücksichtigung einer umschaltbaren Polarität gebildet werden. Wird mit Us(t) die zum Zeitpunkt t durchgeschaltete Spannungsstufe und mit US(max) der positive Maximalwert von Us(t) bezeichnet, so gilt praktisch

$$\text{Us}(t) = \sum_{k=1}^{n} vk(t) \cdot Uk;$$

$$\text{Us}(\text{max}) = \sum_{k=1}^{n} Uk$$

wobei die Zahl n die Anzahl der zur Verfügung stehenden einzelnen Gleichspannungen, Uk die Höhe jeder einzelnen Gleichspannung und vk(t) den momentanen Schaltzustand der jeweiligen Schalteinrichtung bezeichnet: Trägt zum Zeitpunkt t die einzelne Gleichspannung Uk mit der positiven Polarität zur Spannung am Wechselspannungsanschluß bei, so ist vk(t) = +1; ist die Polarität umgeschaltet, so ist vk(t) = -1; und ist die einzelne Gleichspannung Uk "ausgeschaltet" so gilt vk(z) = 0.

Die Spannung Us(t) des bevorzugt betrachteten mehrstufigen Pulswechselrichters entspricht also der Spannung einer Reihenschaltung aus mehreren Gleichspannungsquellen Uk, die jeweils entsprechend dem Faktor vk(t) mit einer vorgegebenen Polarität in die Reihenschaltung hineingeschaltet oder herausgeschaltet werden.

Werden statt Gleichspannungsquellen Gleichstromquellen verwendet, so kann ein Pulswechselrichter jeweils eine von mehreren Gleichstromstufen durchschalten, die jeweils durch eine Addition einzelner Gleichströme (entsprechend einer Parallelschaltung von Gleichströmen) mit umschaltbarer Polarität erzeugt werden. Da aber derartige mehrstufige Strom-Pulswechselrichter gegenwärtig praktisch ohne wirtschaftliche Bedeutung sind, betrifft die Erfindung vorzugsweise Pulsumrichter, deren Ausgangsspannung durch eine vorgegebene, praktisch lastunabhängige Gleichspannung und den Schaltzustand der Umschalteinrichtung bestimmt ist.

In FIG 4 bilden die vier Einzel-Wechselrichter DC1,...DC4, die kurz als "Steller" bezeichnet seien, von der gemeinsamen Gleichspannung Ug gespeist werden und über die Umschalteinrichtungen S11,S12,S21,...S42 vier Primärwicklungen eines Transformators speisen, eine derartige mehrstufige Wechselrichteranordnung. Im Gegensatz zu FIG 2 und 3 sind die Gleichspannungen Uk, die jeweils durch Uk = Ug gegeben sind, am Wechselspannungsanschluß transformotorisch in Reihe geschaltet. Die Anschlußspannung Us(t) kann meßtechnisch durch Addition der Einzel-Spannungen an den Ausgängen von DC1,...DC4 gewonnen werden. Es gilt also n = 4 und Us(t) kann entsprechend

$$\text{Us}(t) = k \cdot Ug \qquad k = 0, \pm 1, ... \pm 4$$

3

eine von neun äquidistanten Gleichspannungsstufen zwischen ±4 . Ug annehmen.

Um in den mehrstufigen Schaltungen nach FIG 2 und 3 gegenüber dem Potential am Punkt N die mittlere positive Spannungsstufe durchzuschalten, müssen die beiden Ventile T1a und T4a gesperrt und T2a bzw. T3a gezündet sein. Hierfür kann bei dem mehrstufigen Wechselrichter der FIG 4 ein beliebiger Steller eingeschaltet werden. Die "Spannungsquellen" der Reihenschaltung sind also bei diesem Spezialfall der in FIG 1 gezeigten allgemeinen Darstellung unabhängig voneinander schaltbar. Lediglich die Spannungsstufen "Null" und "Maximal" sind eindeutig dadurch festgelegt, daß alle Spannungsquellen "aus der Reihenschaltung herausgeschaltet" oder "mit gleicher Polarität in die Reihenschaltung hineingeschaltet" sind. Die übrigen Spannungsstufen, die den anderen Stellungen der mehrstufigen Umschalter in FIG 1 entsprechen, können jeweils durch mehrere Schaltzustände verwirklicht werden.

Im allgemeinen ist eine möglichst sinusförmige Spannung an den Wechselspannungsanschlüssen angestrebt, die durch Pulsbreitenmodulation einer sinusförmigen Sollspannung erreicht wird.

Ein auch für einen mehrstufigen Wechselrichter geeignetes Pulssteuerverfahren ist als sogenanntes "Unterschwingungsverfahren" bekannt. Dabei wird die Sollspannung U(t)* mit einer sägezahnförmigen Tastspannung Uz1 abgetastet, um aus den Schnittpunkten beider Spannungen die Umschaltzeitpunkte für einen Umschalter zu bestimmen. Durch Abtastung mit der invertierten Sägezahnspannung $\overline{Uz1}$ können die Umschaltzeitpunkte für den an den anderen Ausgang des gleichen Stellers angeschlossenen Umschalter ermittelt werden. Die Erzeugung dieser Schaltsignale ist in FIG 4 nur für einen Steller dargestellt. Die anderen Steller erhalten ihre Steuersignale ebenfalls durch Abtastung der Sollspannung mit entsprechenden Sägezahnspannungen, wobei die unterschiedlichen Stellern zugeordneten Sägezahnspannungen gegeneinander phasenverschoben sind. Daher werden praktisch niemals zwei Umschalter gleichzeitig betätigt. Die Spannung Us(t) wird jeweils nur von einer Spannungsstufe auf eine benachbarte Spannungsstufe umgeschaltet.

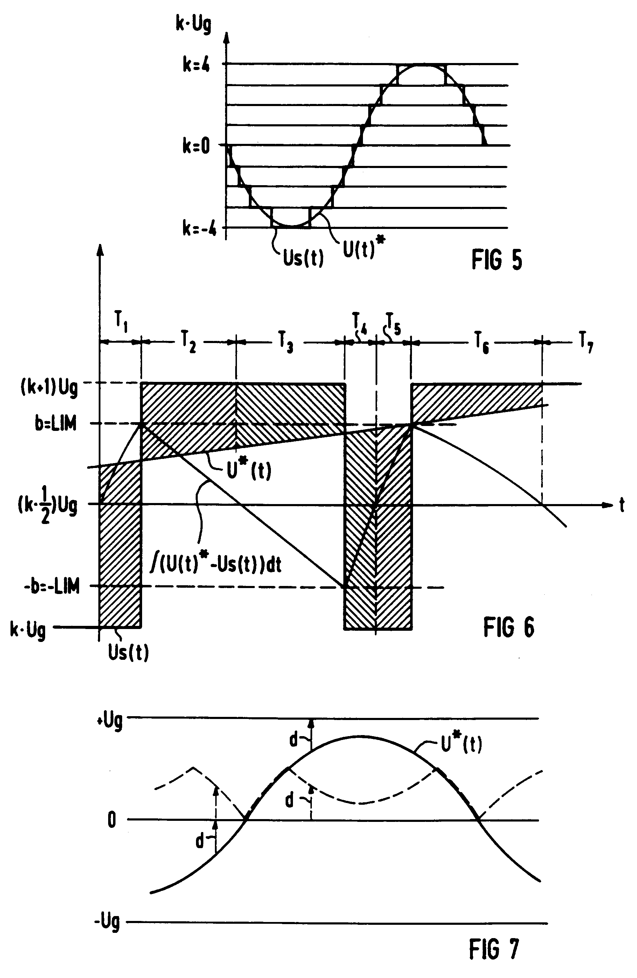

FIG 5 zeigt den Verlauf der sinusförmigen Sollspannung U(t)* und der sich nur diskontinuierlich ändernden Anschlußspannung Us(t), die also nur eine von neun Spannungsstufen annehmen kann. Zur besseren Übersicht ist der vollausgesteuerte Zustand gezeigt, bei dem die Grundschwingung der Anschlußspannung Us(t) ihren Maximalwert annimmt und die Spannungsstufen nacheinander durchlaufen werden. Wird dagegen zwischen zwei Spannungsstufen hin- und hergeschaltet, so erreicht man bei einer niedrigeren Amplitude der Grundschwingung eine besser Annäherung an die Sinusform und damit einen geringeren Gehalt an Oberschwingungen in Wechselstrom und Wechselspannung.

Ein Nachteil des Unterschwingungsverfahrens ist, daß mit einem konstanten Frequenzverhältnis von Sollspannung und Abtastspannung gearbeitet wird. Es treten daher je nach Aussteuerung bestimmte Oberfrequenzen in der Anschlußspannung Us(t) besonders stark hervor. Sind die Abtastspannungen nicht auf die Sollspannung synchronisiert, so treten außerdem auch Schwebungen, also auch niedrige Frequenzen auf.

Besondere Schwierigkeiten treten beim Betrieb eines Stromrichters an einem ausgedehnten Versorgungsnetz auf, dessen Eigenfrequenzen unbekannt und/oder zeitlich veränderlich sind. Insbesondere sind die Schwierigkeiten für einen Fahrzeugmotor, der mittels eines mobilen Umrichters am Netz betrieben wird, in den gleichzeitig eingereichten Anmeldungen "Vorrichtung und Verfahren zum optimierten Betrieb eines an ein Netz angeschlossenen Stromrichters" und "Verfahren und Vorrichtung zum optimierten Betrieb eines Pulswechselrichters am Netz" des gleichen Anmelders ausführlich beschrieben. Dort sind Optimierungsmethoden zur Bestimmung der Schaltzeitpunkte für die Schalteinrichtungen des Stromrichters angegeben, die es ermöglichen, die Anregung von Eigenfrequenzen im Versorgungsnetz zu minimieren. Diese Optimierungsmethoden erfordern jedoch sowohl für den Start des Stromrichters wie für die Optimierung jeweils Startwerte für die Schaltzeitpunkte. Diese können zwar auf die beschriebene Weise durch das "Unterschwingungsverfahren" gewonnen werden, jedoch werden auch hierbei niederfrequente Schwingungen im Spektrum von Us(t) erzeugt.

Der Erfindung liegt die Aufgabe zugrunde, für einen mehrstufigen Wechselrichter, wie er eingangs beschrieben wurde, ein neues Steuerverfahren anzugeben. Insbesondere soll dabei für Wechselstrom und Wechselspannung ein günstigeres Frequenzspektrum erreicht werden.

Diese Aufgabe wird gelöst durch ein Verfahren mit den Merkmalen des Anspruchs 1. Vorteilhafte Weiterbildungen des Verfahrens sind in den Unteransprüchen gekennzeichnet. Anhand von 18 Figuren und eines besonders bevorzugten Ausführungsbeispiels wird die Erfindung näher erläutert. Dabei zeigen:

| FIG 1 bis 4 | bereits erläuterte Ausführungsformen von Mehrpunkt-Wechselrichtern nach dem Stand der Technik, |
|---|---|
| FIG 5 | die bereits erläuterte neunstufige Ausgangsspannung des Einphasen-Wechselrichters nach FIG 4, |
| FIG 6 | den Verlauf von Sollspannung, Wechselrichter-Anschlußspanung und dem Integral, |

EP 0 491 690 B1

das gemäß der Erfindung zur Bestimmung der Schaltzeitpunkte verwendet wird,

FIG 7 einen vorteilhaften Verlauf des Grenzwertes für das betrachtete Integral im Fall eines Zweipunkt-Wechselrichters,

FIG 8 den Verlauf des Grenzwertes für den neunstufigen Fall,

FIG 9 den oberen und unteren Wert für die Bestimmung der Variationsintervalle bei einer Optimierung der Schaltzeitpunkte,

FIG 10 den Verlauf der Spannung Us(t) bei der Steuerung des Wechselrichters nach FIG 4 mittels des bekannten Unterschwingungsverfahrens,

FIG 11 den dabei auftretenden Oberschwingungsstrom,

FIG 12 und 13 das Spektrum der Spannung am Anschluß des Wechselrichters und des Netzes,

FIG 14 die Steuersignale für die einzelnen Steller des Wechselrichters und den dazu proportionalen Verlauf der einzelnen Ausgangsspannungen,

FIG 15 und 16 den Verlauf der gesamten Anschlußspannung und des Oberschwingungsstromes bei Steuerung nach der Erfindung, und

FIG 17 und 18 das Spektrum der Spannung am Stromrichteranschluß und Netzanschluß bei der Steuerung nach der Erfindung.

Die Erfindung geht, wie bereits anhand der FIG 1 bis 5 erläutert wurde, von einem Pulswechselrichter aus, der Umschalteinrichtungen enthält, um jeweils auf einen Ausgang des Pulswechselrichters eine von mehreren Spannungsstufen durchzuschalten. Das erfindungsgemäße Verfahren wird anhand des einphasigen Pulswechselrichters der FIG 4 erläutert, bei dem die einzelnen Spannungsstufen durch Einschalten der einzelnen Vier-Quadranten-Steller DC1 bis DC4 erreicht wird. Die Erfindung ist aber nicht auf den einphasigen Fall und die in FIG 4 gezeigte Schaltung eines mehrstufigen Pulswechselrichters beschränkt. Nach dem Prinzip der Erfindung können auch Gleichströme gepulst werden.

Erfindungsgemäß wird die Spannung Us(t) auf einen Sollwert U*(t) eingestellt, indem die Umschalteinrichtungen betätigt werden, wenn das Integral der Differenz aus der Sollspannung U*(t) und der durchgeschalteten Spannung Us(t) einen vorgegebenen Grenzwert erreicht.

Zur Erläuterung des Verfahrens ist zunächst der Fall betrachtet, daß die Steller DC2, DC3 und DC4 jeweils die Zwischenkreisspannung Ug auf ihren Ausgang durchschalten und der Schalter S11 den unteren Ausgang des Stellers DC1 mit dem Gleichspannungspol N verbindet. Die Ausgangsspannung Us(t) kann also nur zwischen $k \cdot Ug$ und $(k + 1) \cdot Ug$ mit $k = 3$ hinauf- und heruntergeschaltet werden.

Zum Zeitpunkt $t = 0$ (FIG 6) sei der Schalter S12 in seiner unteren Stellung, d.h. auf den Gleichspannungspol N geschaltet. Zu diesem Zeitpunkt ist die Sollspannung $U(t = 0)^*$ daher größer als die durchgeschaltete Spannung $Us(t) = 3 \cdot Ug$; die Differenz beider Werte ist also positiv. Folglich nimmt die Funktion

$$F(t) = \int_{to}^{t} (U(t')^* - Us(t')) \, dt'$$

stetig zu und erreicht zum Zeitpunkt $t = T1$ den Grenzwert b. Dadurch ist ein Umschaltzeitpunkt für diesen Steller festgelegt.

Welche Umschalteinrichtung betätigt werden soll, ergibt sich in diesem Betriebszustand bereits aus der Vorschrift, daß jeweils eine höhere Spannungsstufe durchgeschaltet wird, wenn das Integral F einen oberen Grenzwert erreicht, und eine niedrigere Spannungsstufe durchgeschaltet wird, wenn das Integral F einen unteren Grenzwert erreicht. Um im betrachteten Fall nämlich die höhere Spannungsstufe $Us(t) = 4 \cdot Ug$ zu erzeugen, muß die Umschalteinrichtung S12 auf den Gleichspannungspol P geschaltet sein. Da jeder Steller als eine Gleichspannungsquelle und die gesamte Ausgangsspannung Us(t) als Reihenschaltung der Spannungsquellen betrachtet werden kann, bedeutet das Umschalten von S12, das nunmehr in diese Reihenschaltung auch die vom Steller DC1 dargestellte Gleichspannungsquelle in die Reihenschaltung eingeschaltet wird.

Nach der Einschaltdauer T2 erreicht das Integral F wieder den Startwert. Dies bedeutet, daß die in FIG 6 gleichartig schraffierten Spannungszeit-Flächen gleich groß sind. Zu diesem Zeitpunkt könnte also erneut auf $Us(t) = 3 \cdot Ug$ zurückgeschaltet werden, was einem Herausschalten der vom Steller DC1 gebildeten Gleichspannungsquelle gleichkommt. Aus Symmetriegründen ist in FIG 6 jedoch das Rückschalten auf die niedrigere Spannungsstufe erst vorgenommen, wenn das Integral den unteren Grenzwert $-LIM = -b$ erreicht. Die Einschaltzeit der höheren Spannungsstufe vergrößert sich daher um die Dauer T3, an die sich jetzt die Ausschaltzeiten T4 und T5 für den Steller DC1 anschließen. Auch die Spannungszeit-Flächen über

5

T3 und T4, die durch den Wert des Integrals gegeben und durch gleichartige Schraffierung dargestellt sind, sind wieder gleich groß.

Man erkennt aus FIG 6, daß die Einschaltzeiten (T2 + T3), (T6 + T7) zunehmen, je näher der Sollwert U*(t) an der nächst höheren Spannungsstufe (k + 1) Ug liegt. Zwar vermindern sich gleichzeitig auch die Ausschaltzeiten, z.B. (T4 + T5), jedoch wachsen für U*(t) > (k + 1/2) Ug die Einschaltzeiten stärker als sich die Ausschaltzeiten verringern. Für U*(t) < (k + 1/2) Ug sind die Verhältnisse umgekehrt. In jedem Fall nimmt daher die Dauer eines Schaltzyklusses zu, wenn von den Differenzen zwischen der Sollspannung und den möglichen Niveaus der Spannung jeweils der minimale Wert

$$d = \min (|U^*(t) - k \cdot Ug|) \qquad k = 0, \pm 1, \ldots \pm 4$$

abnimmt. Dieser Minimalwert d erfaßt den Abstand des Sollwertes von der nächstliegenden Spannungsstufe. Der Steller erzeugt also eine Pulsfolge, deren Folgefrequenz nicht konstant ist, sondern sich wie die Sollspannung U*(t) zeitlich kontinuierlich verändert.

Bei einer sich periodisch ändernden Sollspannung U*(t) kommt hinzu, daß keine feste Phasenbeziehung zwischen den Umschaltzeitpunkten und der Phasenlage der Sollspannung besteht. Es handelt sich also um ein asynchrones Pulssteuerverfahren mit variierender Pulsfolgefrequenz.

Dies ist besonders im Hinblick auf das Spektrum der Oberschwingungen des Stromes vorteilhaft. Denn zwischen dem Strom $I_L$ und dem Spannungsabfall $U_L$ an einer Impedanz L gilt bekanntlich der Zusammenhang:

$$I_L = \frac{1}{L} \int U_L \cdot dt.$$

Bei sinusförmiger Sollspannung ist die Grundschwingung $I_O$ des Stromes der Sollspannung proportional. Daher ist praktisch der Oberschwingungsstrom ($I_L - I_O$) proportional zu der durch F(t) erfaßten Spannungs-Zeitfläche, die bei dem erfindungsgemäßen Verfahren auf den Grenzwert LIM begrenzt ist.

Das Frequenzspektrum des Oberschwingungsstromes jedoch ist wegen der asynchronen Pulserzeugung nicht konstant sondern quasistochastisch veränderlich. Dabei können sich allerdings niedrige Frequenzen und überlange Schaltdauern ergeben.

Dies kann durch eine gewisse Zuordnung des Grenzwertes LIM zum Verlauf der Grundschwingung vermieden werden. Hierzu wird der Grenzwert LIM abweichend von FIG 6 nicht konstant gleich dem Wert b vorgegeben, sondern auf den Verlauf der Spannungsgrundschwingung abgestimmt. Nach FIG 7 wird der Wert d erfaßt, der den minimalen Wert der Differenzen zwischen der momentanen Amplitude der Spannungsgrundschwingung einerseits und den Spannungsstufen andererseits angibt. Der Wert b in FIG 6 ist aber nur ein unterer Wert für Den Grenzwert LIM, der die Pulsfolge-Frequenz für U*(t) ≈ k · Ug bestimmt. Der Grenzwert LIM selbst wird in Abhängigkeit von dem Minimalwert d vergrößert.

Um einen linearen Zusammenhang zu erreichen, kann insbesondere der obere Grenzwert LIM (entsprechend auch der untere Grenzwert - LIM) als Funktion der Grundschwingung am Wechselstromanschluß des Pulswechselrichters vorgegeben werden. Der Momentan wert dieser Spannungsgrundschwingung kann dabei am einfachsten aus dem Momentanwert U*(t) = A · sin ωt des Spannungssollwertes, der durch seine Soll-Amplitude A und seine Soll-Frequenz ω vorgegeben sein kann, erfaßt werden, um eine phasengetreue und amplitudenrichtige Istwert-Erfassung der Spannungsgrundschwingung zu vermeiden.

Da die möglichen Spannungsstufen durch k · Ug (mit K = 0, ±1, ...±n) und der erwähnte Momentan wert durch U* gegeben sind, ergibt sich mit einem Minimalwert b für den Grenzwert LIM und einem Proportionalitätsfaktor a:

$$LIM(U^*) = a \cdot \min (|U^*(t) - k \cdot Ug|) + b$$

Je kleiner b gewählt wird, umso höher wird die sich einstellende mittlere Schaltfrequenz, während durch den Faktor a die Synchronisierung bestimmter Umschaltzeitpunkte auf die Phasenlage der Sollspannung U* beeinflußt wird.

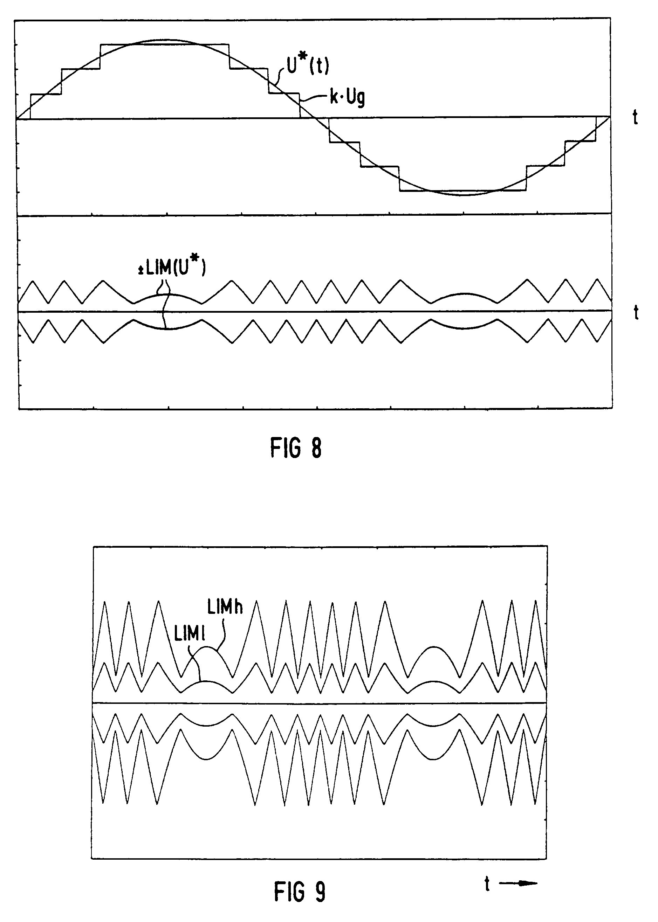

FIG 8 zeigt den Verlauf der Ausgangsspannung Us(t) im ungepulsten Betrieb und des Grenzwertes ±LIM(U*) für einen Betriebszustand mit A/(n · Ug) ≦ 0,8.

Zur Bestimmung der Umschaltzeitpunkte kann durch die Frequenz und Amplitude A des Spannungssollwerts die entsprechende Funktion U(t)* gebildet und deren Differenz von der gemessenen Ausgangsspannung Us(t) in einem Integrator integriert werden. Die dadurch gebildete Funktion F(t) kann dann in eins Grenzwertmelder mit dem durch eine entsprechende Rechenschaltung gebildeten Grenzwert LIM(U*) verglichen werden, um daraus die Umschaltzeitpunkte zu gewinnen. Vorteilhaft kann aber auch direkt ausgegangen werden vom Betragssollwert A, dem Frequenzsollwert für die momentane Sollspannung und vorgegebenen Parametern (z.B. a und b), die den Grenzwert LIM(U*) in seiner Abhängigkeit vom Sollwert und somit auch in seiner Zeitabhängigkeit bestimmen. Daraus wird dann jeweils errechnet, wann nach einem Umschaltzeitpunkt das Integral den Grenzwert erreicht und daher wieder umgeschaltet werden muß. Unter geeigneten Vereinfachungen ist diese Berechnung geschlossen durchführbar.

Zwischen zwei Umschaltungen bleibt die Anschlußspannung Us(t) konstant. Werden außerdem pro Grundschwingungsperiode z.B. etwa 180 Schaltzeitpunkte berechnet, so ist es zulässig, den Sinus in einen Taylor-Reiher zu entwickeln und nach dem ersten Glied abzubrechen. Es gilt also

$$F(t) = \int (A\sin(\omega t) - Us(t))\, dt,$$
$$\sin(x + \Delta x) = \sin(x) + (\Delta x)\cos(x)$$
$$F(t) = {}_{t_0}\!\int^{t} \{A.\sin(\omega t_0) + \omega(\tau - t_0).\cos(\omega t_0) - Us(t_0)\}\, d\tau + F_0$$

wobei mit F0 dar Wert des Integrals zum letzten Umschaltzeitpunkt t = t0 bezeichnet ist. Daraus folgt

$$F(t) = A . \frac{\omega.\cos(\omega t_0)}{2} . t^2 +$$
$$(A.\sin(\omega.t_0) - A.\omega.t_0\cos(\omega.t_0) - Us(t_0)) . t +$$
$$(- A.\sin(\omega.t_0) + \frac{A.\omega}{2}\cos(\omega t_0) + Us(t_0)) . t_0 + F_0$$

und mit

$$a2 = A.\omega.\cos(\omega.t_0)/2$$
$$a1 = A(\sin(\omega.t_0) - \omega.t_0.\cos(\omega t_0)) - Us(t_0)$$
$$a0 = (- A\sin(\omega.t_0) + A.\omega.\cos(\omega.t_0)/2 + Us(t_0)) t_0 + F_0$$

ergibt sich

$$F(t) = a2 . t^2 + a1 . t + a0.$$

Der Zeitpunkt, an dem der Grenzwert LIM erreicht wird, ergibt sich aus

$$|F(t)| = LIM(U^*) \quad bzw. \quad F(t) = \pm LIM(U^*).$$

Daraus folgt die quadratische Gleichung

$$a2.t^2 + a1 . t + a0 \pm LIM(U^*) = 0.$$

Dazu gehören die beiden Lösungen

$$t = - \frac{a1}{2 . a2} \pm \sqrt{\left(\frac{a1}{2 . a2}\right)^2 - \frac{a0 \pm LIM(U^*)}{a2}}$$

Je nach den Werten der Parameter erhält man keine Lösung, eine einzige Lösung oder zwei Lösungen. Eine Parameterkonstellation, bei der keine Lösung auftritt, kann im regulären Betrieb nicht auftreten. Tritt nur eine Lösung auf, so ist dadurch der nächste Umschaltzeitpunkt bereits bestimmt. Ein Fall, bei dem zwei

7

Lösungen auftreten, die beide kleiner sind als t0, kann ebenfalls nicht auftreten. Ist dagegen bei zwei Lösungen eine der beiden Lösungen kleiner als t0, so gibt die andere Lösung den Umschaltzeitpunkt an. Sind schließlich beide Lösungen größer als t0, so kann die kleinere der beiden Lösungen als Umschaltzeitpunkt verwendet werden.

Bisher war der Fall betrachtet worden, daß Der Umschalter S11 des Stellers DC1 auf den Gleichspannungspol N geschaltet und der Umschalter S12 des Stellers DC1 seine Eingangsspannung Ug in die Reihenschaltung der Spannungsquellen DC2, DC3 und DC4 hinein- oder herausschaltet. Die Umschaltzeitpunkte des Schalters S12 sind dann durch diese Berechnung festgelegt. In gleicher Weise kann auch für negative Werte von U* zwischen den Spannungsstufen k = -3 und k = -4 hin- und hergeschaltet werden. In diesem Fall wäre der Schalter S12 auf N gelegt und der Schalter S11 würde zwischen P und N wechseln, um die Spannung -Ug in die Reihenschaltung der Spannungsquellen am Ausgang des gesamten Pulswechselrichters hinein- oder herauszuschalten. Es gibt aber noch andere Möglichkeiten, den berechneten Umschaltzeitpunkten die jeweils zu betätigende Umschalteinrichtung zuzuordnen. Hierzu sei wiederum zunächst nur ein Zweipunkt-Wechselrichter, z.B. der 4-Quadrantensteller DC1 der FIG 4 betrachtet.

Der Zustand, bei dem die Spannung Ug positiv auf den Stellerausgang durchgeschaltet ist, ist nur erreichbar, wenn S11 auf N und S12 auf P geschaltet ist. Jedoch kann jeder dieser beiden Umschalter unabhängig vom anderen umgelegt werden. Um die Spannung Ug vom Stellerausgang zu trennen ("den Steller DC1 abzuschalten" oder "Ug aus der Ausgangsspannung Us(t) herauszuschalten") muß nun nicht, wie bisher angenommen, S12 auf N umgeschaltet werden, vielmehr kann auch S11 auf P geschaltet werden. Bei diesem "Zweipunkt-Wechselrichter" hat also jeder der Schalter S11 und S12 die beiden Schaltzustände P und N, und für die Ausgangsspannung Us1 dieses Stellers ergeben sich die drei Spannungsstufen:

| Spannungsstufe | Schalterstellung | Betriebszustand |
|---|---|---|
| Us1 = Ug | S11 = N,S12 = P | "Ug ein" |
| Us1 = 0 | S11 = S12 | "Ug aus" |
| Us1 = -Ug | S11 = P,S12 = N | "-Ug ein" |

Die beiden Möglichkeiten S11 = S12 = P und S11 = S12 = N für den "Aus-Zustand" können ausgenutzt werden, um für die einzelnen Umschalter S11 und S12 eine ausreichende Schonzeit zu erreichen. Ist die Spannungsquelle durch Betätigung eines Umschalters zuletzt eingeschaltet worden, so wird sie durch Betätigen des anderen Umschalters wieder ausgeschaltet. Es ergibt sich also z.B. für ein Takten zwischen k = 3 und k = 4 und anschließenden Übergang auf k = 2 folgendes Schaltschema

| $U_{S1}$ = | +Ug | O | +Ug | O | +Ug | O | +Ug | O | -Ug | O |
|---|---|---|---|---|---|---|---|---|---|---|
| S11 = | N | P | N | N | N | P | N | N | P | P |
| S12 = | P | P | P | N | P | P | P | N | N | P |

Praktisch kann man davon ausgehen, daß die Einhaltung der Schonzeit bei den Umschalteinrichtungen nur für Einschaltzeiten zu fordern ist. Dieses Schema stellt dann sicher, daß jeweils beim Ausschalten ein Umschalter betätigt wird, der vorher bereits für eine längere Zeit umgeschaltet war.

Da aber der gesamte Pulswechselrichter aus mehreren derartigen Spannungsquellen besteht, deren Ausgangsspannungen in Reihe geschaltet sind und dabei jede dieser Spannung unabhängig von den anderen in diese Reihenschaltung hinein- oder herausgeschaltet werden kann, kann für die einzelnen Umschalteinrichtungen die notwendige Schonzeit beim Einschalten noch durch zusätzliche Kriterien sichergestellt werden. Um eine Spannungsquelle aus der Reihenschaltung herauszuschalten, wird nicht die Spannungsquelle ausgeschaltet, die zuletzt eingeschaltet wurde, sondern es wird eine der anderen, bereits eingeschalteten Spannungsquellen ausgewählt. Ist also zuletzt z.B. von k = 2 auf k = 3 durch folgenden Schaltzustand übergegangen worden:

| S11 = S12 = N; | S31 = N; | S32 = P; |
|---|---|---|
| S21 = N; S22 = N → P; | S41 = N; | S42 = P. |

So kann zum Rückschalten auf k = 2 vorgenommen werden:

| S11 = S12;<br>S21 = N; S22 = P; | S31 = N;<br>S41 = N; | S32 = P<br>S42 = P → N. |
|---|---|---|

Unmittelbar danach kann wieder auf k = 3 rückgeschaltet werden durch

| S11 = N;<br>S21 = N; | S12 = N → P;<br>S22 = P; | S31 = N; S32 = P;<br>S41 = S42 = N. |
|---|---|---|

Für diesen Extremfall können Schonzeit-Überwachungen vorgesehen werden, die z.B. das kurzzeitige Rückschalten auf die niedrigere Spannungsstufe unterdrücken oder verlängern. Da diese Extremfällen wegen der asynchronen Steuerung nicht periodisch auftreten, sind dadurch keine bleibenden Verfälschungen oder Schwebungen in der Ausgangsspannung zu befürchten.

Dieses Verfahren ist insbesondere für mehrstufige Pulswechselrichter mit mehreren Gleichspannungsquellen vorteilhaft, die mit einer wählbaren Polarität in einer Reihenschaltung auf den Anschluß durchgeschaltet werden können. Im Fall der FIG 4 ist jede der schaltbaren Gleichspannungsquellen als "4-Qadranten-Steller" ausgebildet, dessen Polarität unabhängig vorgegeben werden kann.

Hierbei ist aber zu bedenken, daß häufig eine Vergrößerung von Us(t) dadurch möglich ist, daß entweder die Spannung -Ug eines eingeschalteten Stellers ausgeschaltet oder bei einem ausgeschalteten Steller die Spannung +Ug eingeschaltet wird. Vorteilhaft kann dies ausgenutzt werden, um die Leistung möglichst gleichmäßig auf die einzelnen Spannungsquellen zu verteilen.

Eine gewünschte Änderung von Us(t), die durch das Ausschalten eines Stellers erreicht werden kann, wird auch tatsächlich durch das Ausschalten dieses Stellers vorgenommen, selbst wenn die gewünschte Änderung von Us(t) auch durch ein Einschalten eines anderen Stellers möglich wäre. Nur wenn die gewünschte Änderung nicht durch Ausschalten eines Stellers möglich ist, wird sie durch Einschalten eines Stellers ermöglicht. Dies bedeutet praktisch, daß niemals eine Spannung +Ug und eine andere Spannung -Ug in Reihe geschaltet werden.

Stehen mehrere Steller zur Verfügung, von denen ein beliebiger Steller ausgeschaltet werden kann, um die gewünschte Änderung von Us(t) zu erreichen, so wird von diesen Stellern derjenige ausgewählt und ausgeschaltet, der am längsten eingeschaltet war. Die Reihenfolge, in der die Steller eingeschaltet wurden, bestimmt somit auch die Reihenfolge, in der sie wieder ausgeschaltet werden.

Das Einschalten der Steller erfolgt zyklisch: Nach Einschalten von DC4 wird DC3 eingeschaltet, dann DC2 und DC1. Sofern nicht bereits zwischen zwei dieser Einschaltvorgänge ein Ausschaltvorgang liegt, wird spätestens nach Einschalten von DC1 einmal ausgeschaltet. Da U*(t) nicht größer als 4 . Ug werden darf und daher spätestens nach vier Einschaltzeitpunkten einmal ausgeschaltet werden muß, ist nach Einschalten des Stellers DC1 beim nächsten Einschaltzeitpunkt der Steller DC4 bereits ausgeschaltet und kann erneut geschaltet werden. Es erfordert keinerlei weitere Kenntnisse über Aufbau und Wirkungsweise des Stromrichters, einen Mikroprozessor entsprechend zu programmieren, um die errechneten Umschaltzeitpunkte den jeweiligen Umschalteinrichtungen zuzuordnen. Ein entsprechen des Programm kann daher von jedem Programmierer ohne besondere Kenntnisse erstellt werden.

Die bereits erläuterte Wahl des Grenzwertes LIM als Funktion der Spannungsdifferenz d stellt hierbei sicher, daß keine unverhältnismäßig kurzen oder übermäßig langen Ein- und Ausschaltzeiten vorkommen.

Beim Betrieb der in der FIG 4 gezeigten Lokomotive oder anderer Stromrichter an einen Netz können Betriebszustände auftreten, bei denen die vom Stromrichter erzeugten Oberschwingungen von Strom und Spannung im Netz Resonanzen anregen. In der Patentanmeldung "Vorrichtung und Verfahren zum optimierten Betrieb eines an ein Netz angeschlossenen Stromrichters" des gleichen Anmelders ist ein Verfahren geschildert, das von Startwerten für die Umschaltzeitpunkte der Umschalteinrichtungen eines Pulswechselrichters ausgeht und durch Variation der Startwerte optimierte Umschaltzeitpunkte ermittelt, bei denen diese Resonanzen des Netzes gedämpft oder zumindest nicht angeregt werden. Wie bereits erwähnt wurde, ist das erfindungsgemäße Verfahren besonders vorteilhaft, um den Effektivwert des Oberschwingungsstromes, der in diesem Fall ins Netz eingespeist wird und dort die Resonanzen anregt, zu begrenzen. Das in der erwähnten Patentanmeldung beschriebene Variations verfahren ermöglicht es nun, auch das Frequenzspektrum des Oberschwingungstromes zu optimieren.

Derartige Variationsverfahren benötigen die Angabe einer Variationsbreite für die Umschaltzeitpunkte, damit einerseits der Zusammenhang mit der Grundschwingung der Sollspannung erhalten bleibt, andererseits jeweils bei der Variation des nächsten Umschaltzeitpunktes kein Wert errechnet wird, der zeitlich vor dem letzten, bereits durchgeführten Umschalten liegt.

Dies kann dadurch erreicht werden, daß nach den gleichen Beziehungen, nach denen der Grenzwert LIM dar FIG 8 berechnet wurde, auch die Endpunkte des Variationsintervalls bestimmt werden.

FIG 9 zeigt den oberen Grenzwert LIMh und den unteren Grenzwert LIMl dieses Variationsintervalls. LIMl ist dabei z.B. durch 0,8 . LIM(U*) und LIMh durch 2 . LIM(U*) gegeben. Nach jedem Umschalten wird also zunächst aus der entsprechenden Gleichung

$$t_l = - \frac{a1}{2 \cdot a2} \pm \sqrt{(\frac{a1}{2 \cdot a2})^2 - \frac{a0 \pm LIMl}{a2}}$$

$$t_h = - \frac{a1}{2 \cdot a2} \pm \sqrt{(\frac{a1}{2 \cdot a2})^2 - \frac{a0 \pm LIMh}{a2}}$$

der frühest mögliche nächste Umschaltzeitpunkt $t_l$ und der spätest mögliche Umschaltzeitpunkt $t_h$ ermittelt. Die durch die Variation optimierten Schaltzeitpunkte müssen innerhalb dieses Zeitintervalles liegen. Liegt ein Zeitpunkt jenseits des jeweiligen Intervall-Endpunkts, so wird dieser Endpunkt als Umschaltzeitpunkt verwendet.

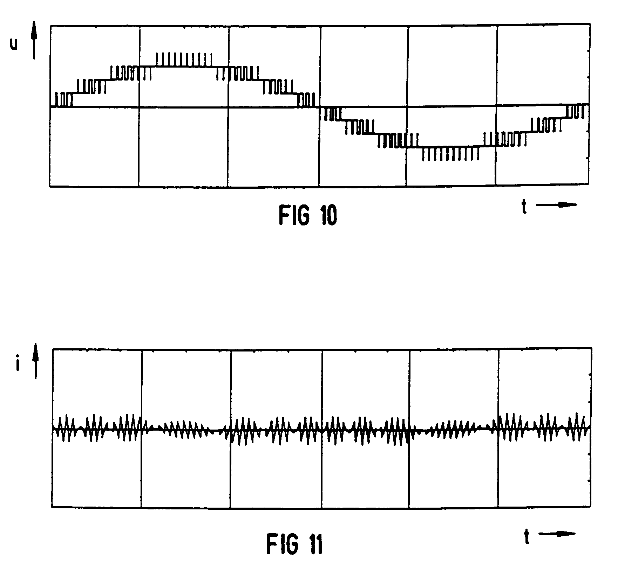

FIG 10 zeigt die Spannung, die sich bei der Anordnung der FIG 4 durch die Addition der vier Stellerspannungen ergibt, wenn diese nach dem Stand der Technik ("Unterschwingungsverfahren") gesteuert werden.

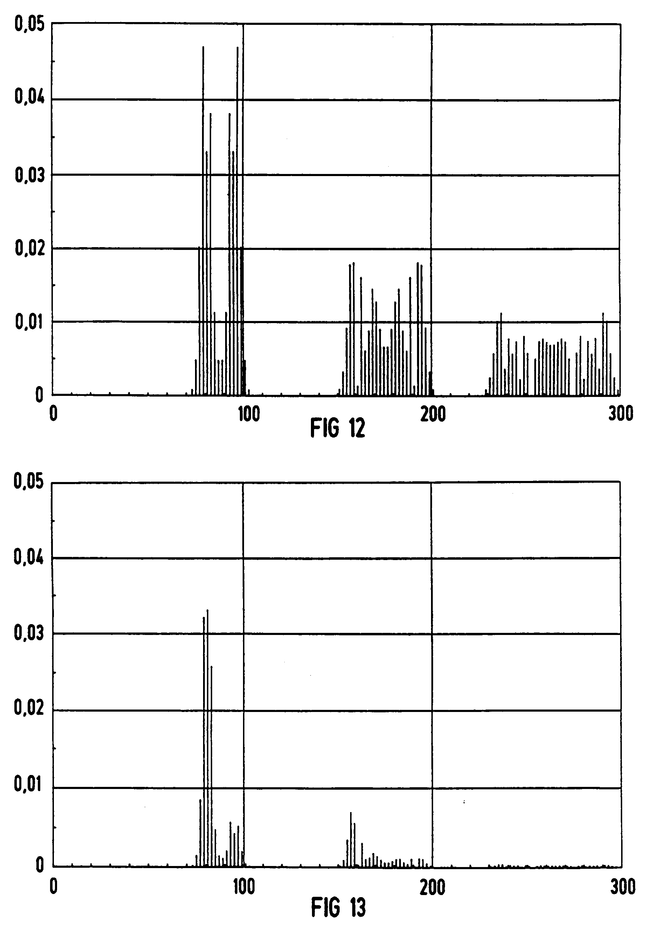

FIG 11 zeigt den Oberschwingungsstrom, d.h. den ins Netz eingespeisten Strom abzüglich seiner Grundschwingung. Die Spannungsspektren der FIG 12 und 13 ergeben sich durch eine Fourieranalyse der in FIG 10 gezeigten Spannung bzw. der am Stromabnehmer abgegriffenen Netzspannung. Das in FIG 12 gezeigte Frequenzspektrum von Us(t) enthält Oberschwingungen der Ordnung 200 bis 300, die praktisch ganz an Transformator und Oberschwingungsfilter abfallen und der Fahrdrahtspannung praktisch nicht eingeprägt werden, da die entsprechenden Oberschwingungsströme vom Netz abgeleitet werden. Das Netz zeigt für diese Frequenzen keine Parallelresonanz, sondern wirkt wie ein Saugkreis (Reihenresonanz). Für Oberschwingungen im Bereich der Ordnungen 80 und 155 jedoch verhält sich das Netz wie ein Parallelresonanzkreis, der von dem entsprechenden Oberschwingungsstrom angeregt ist und als Sperrkreis eine hohe Impedanz aufweist. Die von den Oberschwingungsströmen zugeführte Energie wird in diesem Resonanzfall nur schwach gedämpft. Daher bilden sich im Netz stehende Wellen von Strom und Spannung aus, die an anderen Geräten im Bereich des Netzes zu erheblichen Störungen führen können.

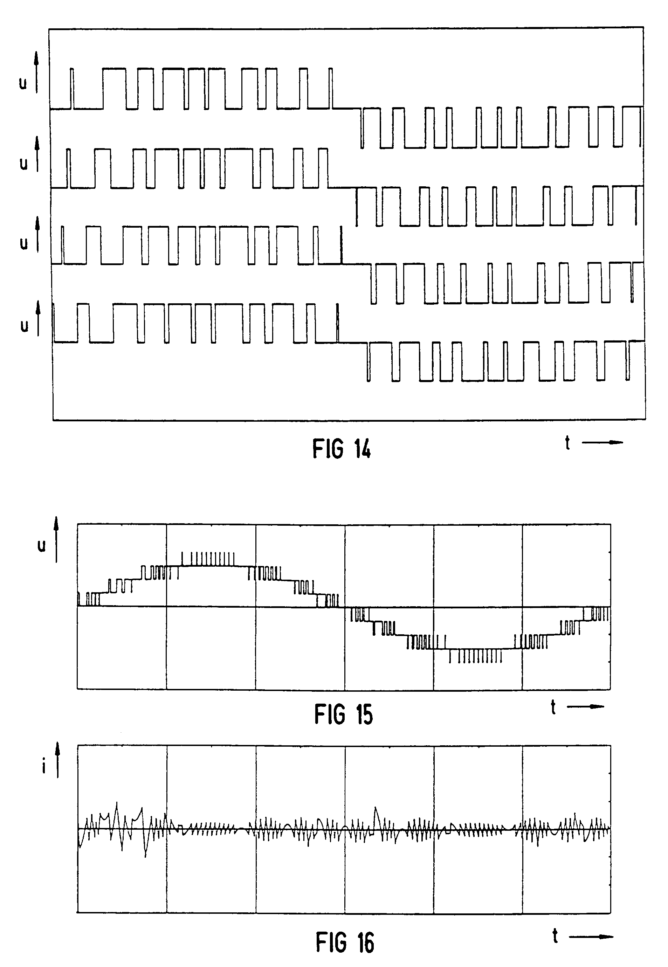

FIG 14 zeigt für einen Aussteuerungsgrad |U*(t)|/(4 . Ug) = 0,8 den Verlauf der einzelnen Ausgangsspannungen der Steller DC1 ...DC4. Die Flanken der dargestellten Impulse geben dabei an, wie in der positiven Halbschwingung die jeweilige Spannung +Ug ein- und ausgeschaltet wird. In der negativen Halbschwingung geben die Flanken die Ein- und Ausschaltzeitpunkte der Spannung -Ug an. Man erkennt dabei deutlich, wie nach den angegebenen Kriterien die einzelnen Steller nacheinander zugeschaltet und abgeschaltet werden.

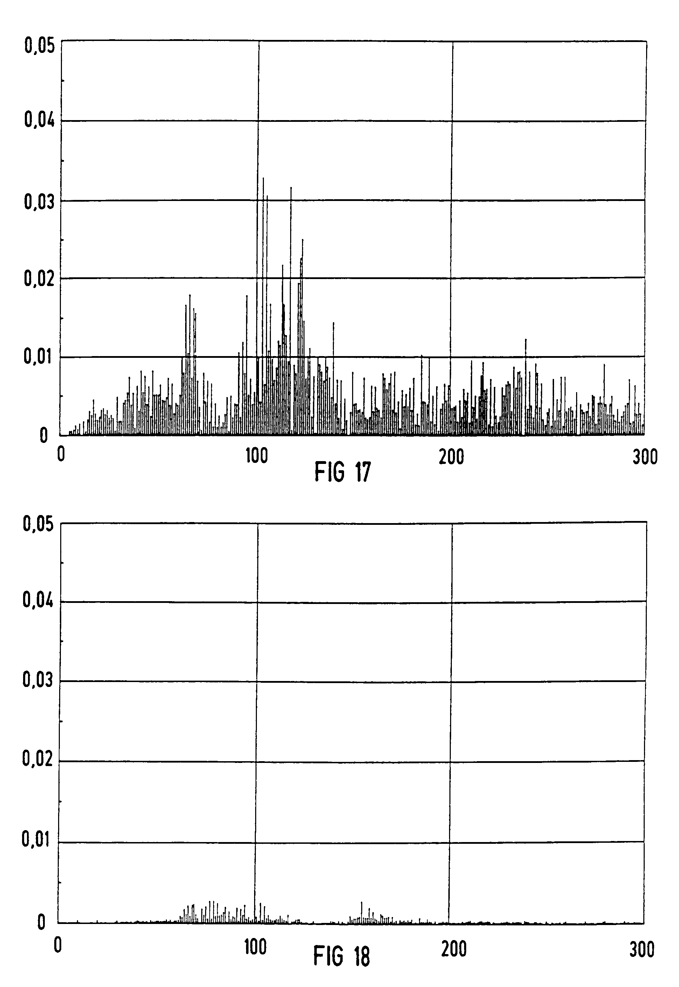

Die Figuren 15 bis 18 entsprechen den Figuren 10 bis 13 bei Anwendung der Erfindung. Bedingt durch das asynchrone Pulssteuerverfahren mit variierender Pulsfolgefrequenz sind im Spektrum der FIG 17 praktisch alle Oberschwingungen vertreten. Gegenüber FIG 12 zeigt sich aber, daß die kritischen Ordnungen 80 und 155 der Oberfrequenzen weniger angeregt sind. Entsprechend sind diese Frequenzen auch im Frequenzspektrum der Spannung am Stromabnehmer, das in FIG 18 gezeigt ist, gegenüber dem Spektrum der FIG 13 wesentlich gedämpft.

Dabei sind Oberfrequenzen niedriger Ordnungszahlen nur verhältnismäßig schwach vertreten. An sich sind derartige niederfrequenten Oberschwingungen begünstigt, wenn bei der Optimierung des Stromrichterbetriebes die Schaltzeitpunkte variiert werden. Beim erfindungsgemäßen Verfahren wirkt sich aber vorteilhaft aus, daß sich jeweils die Verschiebung eines Umschaltzeitpunktes, die sich durch die Variation und Optimierung ergibt, unmittelbar in der Berechnung des Integrals, das den nächsten Zündzeitpunkt bestimmt, auswirkt und dort teilweise kompensiert wird.

**Patentansprüche**

1. Verfahren zur Steuerung eines Pulswechselrichters mit Wechselspannungsanschlüssen und Umschalteinrichtungen, die jeweils eine von mehreren Gleichstromstufen oder insbesondere Gleichspannungsstufen auf einen Wechselspannungsanschluß des Pulswechselrichters durchschalten, **dadurch gekennzeichnet,** daß die Umschalteinrichtungen betätigt werden, wenn das Integral der Differenz aus einem Sollwert und einer der elektrischen Größen der durchgeschalteten Stufe einen vorgegebenen Grenzwert erreicht.

2. Verfahren nach Anspruch 1, **dadurch gekennzeichnet,** daß eine Stufe mit höherem Strom- oder Spannungswert durchgeschaltet wird, wenn das Integral einen oberen Grenzwert erreicht und eine Stufe mit niedrigerem Strom- oder Spannungswert durchgeschaltet wird, wenn das Integral einen unteren Grenzwert erreicht.

3. Verfahren nach Anspruch 1, **dadurch gekennzeichnet,** daß der minimale Wert der Differenzen zwischen einem Momentanwert, der die Amplitude der Grundschwingung am Wechselspannungsanschluß angibt, und einer der elektrischen Größen der Stufen erfaßt und der Grenzwert in Abhängigkeit von dem minimalen Wert vorgegeben wird.

4. Verfahren nach Anspruch 3, **dadurch gekennzeichnet,** daß der Grenzwert gemäß der Gleichung

$$LIM(U^*) = a \cdot \min |U^* - k \cdot Ug| + b$$

vorgegeben wird, wobei $U^*$ der Momentanwert, $k \cdot Ug$ der Spannungswert der jeweiligen Stufen, $b$ ein Minimalwert des Grenzwertes und $a$ ein Proportionalitätsfaktor ist.

5. Verfahren nach Anspruch 1, **dadurch gekennzeichnet,** daß der für die Bildung der Differenz benötigte Sollwert durch einen Betragssollwert und einen Frequenzsollwert vorgegeben wird und daß jeweils nach einer Betätigung einer Umschalteinrichtung aus dem Betragssollwert und dem Frequenzsollwert sowie aus Parametern, die zur Bestimmung des Grenzwertes vorgegeben werden, der Zeitpunkt errechnet wird, an dem das Integral den Grenzwert erreicht und erneut eine Umschalteinrichtung betätigt wird.

6. Verfahren zur Steuerung eines Pulswechselrichters mit Wechselspannungsanschlüssen und Umschalteinrichtungen, die jeweils eine von mehreren Gleichstromstufen oder insbesondere Gleichspannungsstufen auf einen Wechselstromausgang des Pulswechselrichters durchschalten, **dadurch gekennzeichnet,**
    - daß jeweils nach einer Betätigung einer Umschalteinrichtung aus einem Betragssollwert und einem Frequenzsollwert für einen momentanen Sollwert und vorgegebenen Parametern, die einen oberen und einen unteren Grenzwert festlegen, die Endpunkte eines Zeitintervalls berechnet werden, an denen das Integral der Differenz aus dem Sollwert und der durchgeschalteten Stufe den unteren und den oberen Grenzwert erreicht,
    - daß innerhalb dieses Intervalls durch Variation eines Startzeitpunktes nach einem Optimierungsverfahren ein optimierter Schaltzeitpunkt bestimmt wird und
    - daß zu diesem optimierten Schaltzeitpunkt mindestens eine der Umschalteinrichtungen betätigt wird.

7. Verfahren nach Anspruch 5 oder 6, für einen Stromrichter, bei dem mehrere Spannungsquellen mit ihren Ausgangsspannungen in Reihe geschaltet sind und dessen Spannungsstufen dadurch erzeugt werden, daß mehrere Spannungsquellen mittels der Umschalteinrichtungen unabhängig voneinander und mit einer vorgebbaren Polarität in diese Reihenschaltung hineingeschaltet oder aus dieser Reihenschaltung herausgeschaltet werden,
    **dadurch gekennzeichnet,**
    daß zum Herausschalten einer Spannungsquelle eine andere Umschalteinrichtung verwendet wird als beim letzten Hineinschalten einer Spannungsquelle.

8. Verfahren nach Anspruch 7, **dadurch gekennzeichnet,** daß für das Hineinschalten einer Spannungsquelle jeweils die in einem vorgegebenen Zyklus auf die zuletzt hineingeschaltete Spannungsquelle folgende Spannungsquelle ausgewählt wird und daß zum Herausschalten einer Spannungsquelle diejenige ausgewählt wird, die zu diesem Zeitpunkt am längsten eingeschaltet ist.

**Claims**

1. Method for controlling a pulse-controlled inverter with alternating voltage terminals and changeover devices which in each case connect one of several d.c. stages or in particular direct voltage stages to

11

an alternating voltage terminal of the pulse-controlled inverter, characterized in that the changeover devices are actuated when the integral of the difference of a desired value and one of the electrical variables of the connected stage reaches a specified limiting value.

2. Method according to claim 1,
characterized in that a stage with a higher current or voltage value is connected when the integral reaches an upper limiting value and a stage with a lower current or voltage value is connected when the integral reaches a lower limiting value.

3. Method according to claim 1,
characterized in that the minimum value of the differences between an instantaneous value which indicates the amplitude of the fundamental oscillation at the alternating voltage terminal and one of the electrical variables of the stages is detected and the limiting value is specified in dependence upon the minimum value.

4. Method according to claim 3,
characterized in that the limiting value is specified in accordance with the equation

$$LIM(U^*) = a \cdot \min |U^* - k \cdot Ug| + b,$$

where $U^*$ is the instantaneous value, $k \cdot Ug$ the voltage value of the respective stages, b a minimum value of the limiting value and a a proportionality factor.

5. Method according to claim 1,
characterized in that the desired value required for the formation of the difference is specified by a desired magnitude value and a desired frequency value and in that in each case after an actuation of a changeover device, from the desired magnitude value and the desired frequency value and from parameters which are specified for the determination of the limiting value the instant at which the integral reaches the limiting value and a changeover device is actuated anew is calculated.

6. Method for controlling a pulse-controlled inverter with alternating voltage terminals and changeover devices which in each case connect one of several d.c. stages or in particular direct voltage stages to an a.c. output of the pulse-controlled inverter, characterized in that
   - in each case after an actuation of a changeover device, from a desired magnitude value and a desired frequency value for an instantaneous desired value and from specified parameters which establish an upper and a lower limiting value, the end points of a time interval at which the integral of the difference of the desired value and the connected stage reaches the lower and the upper limiting value are calculated,
   - within this interval, through variation of a starting instant an optimized switching instant is determined by an optimization method, and
   - at this optimized switching instant at least one of the changeover devices is actuated.

7. Method according to claim 5 or 6, for a converter where several voltage sources are connected in series with their output voltages and the voltage stages of which are generated by several voltage sources being connected into this series connection or disconnected from this series connection by means of the changeover devices independently of one another and with a specifiable polarity, characterized in that for the disconnection of a voltage source a different changeover device is used to that used with the last connection of a voltage source.

8. Method according to claim 7,
characterized in that for the connection of a voltage source in each case the voltage source following the last connected voltage source in a specified cycle is selected and in that for the disconnection of a voltage source that one is selected which has been connected the longest at this instant.

## Revendications

1. Procédé pour commander un onduleur à impulsions comportant des bornes de tension alternative et des dispositifs de commutation, qui transmettent chacun un échelon parmi plusieurs échelons de courant continu ou notamment des échelons de tension continue à une borne de tension alternative de l'onduleur à impulsions, caractérisé en ce qu'on actionne les dispositifs de commutation lorsque l'intégrale de la différence entre une valeur de consigne et l'une des grandeurs électriques de l'échelon transmis atteint une valeur limite prescrite.

2. Procédé suivant la revendication 1, caractérisé en ce qu'un échelon d'une valeur de courant ou de tension plus grande est transmis lorsque l'intégrale atteint une valeur limite supérieure, et qu'un échelon d'une valeur de courant ou de tension plus petite est transmis lorsque l'intégrale atteint une valeur limite inférieure.

3. Procédé suivant la revendication 1, caractérisé en ce qu'on détecte la valeur minimale des différences entre une valeur instantanée indiquant l'amplitude du mode fondamental sur la borne de tension alternative, et l'une des grandeurs électriques des échelons et que l'on prescrit la valeur limite en fonction de la valeur minimale.

4. Procédé suivant la revendication 3, caractérisé en ce que la valeur limite est prescrite suivant l'équation:

$$LIM(U^*) = a . min |U^* - k . Ug| + b$$

U* étant la valeur instantanée, k . Ug la valeur de la tension de l'échelon, b une valeur minimale de la valeur limite et a un facteur de proportionnalité.

5. Procédé suivant la revendication 1, caractérisé en ce qu'on prescrit la valeur de consigne nécessaire pour former la différence au moyen d'une valeur absolue de consigne et au moyen d'une valeur de consigne de la fréquence, et qu'après une mise en action d'un dispositif de commutation, on calcule l'instant, auquel l'intégrale atteint la valeur limite et auquel à nouveau un dispositif de commutation est actionné, à partir de la valeur absolue de consigne et de la valeur de consigne de la fréquence ainsi qu'à partir de paramètres, donnés à l'avance pour déterminer la valeur limite.

6. Procédé pour commander un onduleur à impulsions comportant des bornes de tension alternative et des dispositifs de commutation, qui transmettent respectivement un échelon parmi plusieurs échelons de courant continu ou notamment des échelons de tension continue à une sortie à tension alternative de l'onduleur à impulsions, caractérisé
   - en ce que, après chaque mise en action d'un dispositif de commutation, on calcule les instants extrèmes d'un intervalle de temps, auxquels l'intégrale de la différence entre la valeur de consigne et l'échelon transmis atteint la valeur limite inférieure et la valeur limite supérieure, à partir d'une valeur absolue de consigne et d'une valeur de consigne de la fréquence pour une valeur de consigne instantanée, et à partir de paramètres prescrits, qui fixent une valeur limite supérieure et une valeur limite inférieure,
   - que l'on détermine dans cet intervalle, un instant de commutation optimisé par modification de l'instant de départ suivant un procédé d'optimisation, et
   - qu'à cet instant de commutation optimisé, on met au moins l'un des dispositifs de commutation en action.

7. Procédé suivant la revendication 5 ou 6 pour un convertisseur statique, dans lequel on branche en série plusieurs sources de tension ayant leur propre tension de sortie et on produit leurs échelons de tension, en connectant à ce circuit série ou en déconnectant de ce circuit série plusieurs sources de tension indépendamment les unes des autres au moyen des dispositifs de commutation et en ayant une polarité pouvant être prédéterminée, caractérisé en ce que pour la déconnexion d'une source de tension, il est utilisé un dispositif de commutation autre que celui utilisé pour le dernier branchement d'une source de tension.

8. Procédé suivant la revendication 7, caractérisé en ce que pour la connexion d'une source de tension, on sélectionne la source de tension qui, dans un cycle prescrit, suit la source de tension branchée en dernier lieu, et que pour la déconnexion d'une source de tension, on sélectionne celle, qui, à cet instant, est branchée depuis le plus longtemps.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16

FIG 17

FIG 18

21